Europäisches Patentamt

European Patent Office

Office européen des brevets

(19)

(11) **EP 1 289 636 B1**

(12) **EUROPÄISCHE PATENTSCHRIFT**

(45) Veröffentlichungstag und Bekanntmachung des Hinweises auf die Patenterteilung:
**15.06.2005  Patentblatt 2005/24**

(21) Anmeldenummer: 01947310.7

(22) Anmeldetag: **23.05.2001**

(51) Int Cl.⁷: **B01D 71/56**, B01D 67/00

(86) Internationale Anmeldenummer:
**PCT/EP2001/005918**

(87) Internationale Veröffentlichungsnummer:
**WO 2001/093994 (13.12.2001 Gazette 2001/50)**

(54) **POLYAMIDMEMBRAN MIT ERHÖHTER HYDROLYSESTABILITÄT UND VERFAHREN ZU IHRER HERSTELLUNG**

POLYAMIDE MEMBRANE EXHIBITING AN INCREASED HYDROLYSIS STABILITY AND METHOD FOR THE PRODUCTION THEREOF

MEMBRANE POLYAMIDE A STABILITE RENFORCEE A L'HYDROLYSE ET SON PROCEDE DE PRODUCTION

(84) Benannte Vertragsstaaten:
**AT BE CH CY DE DK ES FI FR GB GR IE IT LI LU MC NL PT SE TR**

(30) Priorität: **03.06.2000  DE 10027701**

(43) Veröffentlichungstag der Anmeldung:
**12.03.2003  Patentblatt 2003/11**

(73) Patentinhaber: **Membrana GmbH**
**42201 Wuppertal (DE)**

(72) Erfinder: **WECHS, Friedbert**
**63939 Wörth/Main (DE)**

(74) Vertreter: **Fett, Günter**
**CPW GmbH**
**Kasinostrasse 19-21**
**42103 Wuppertal (DE)**

(56) Entgegenhaltungen:
**US-A- 4 340 480**       **US-A- 4 594 207**
**US-A- 4 711 793**

## Beschreibung

Die Erfindung betrifft ein Verfahren zur Herstellung von Polyamidmembranen mit verbesserter Hydrolysestabilität sowie Polyamidmembranen mit verbesserter Hydrolysestabilität.

Polyamidmembranen werden in der Membrantechnologie in vielfacher Weise eingesetzt z.B. als Ultrafiltrationsmembran oder als Mikrofiltrationsmembran für Filtrationsaufgaben in Bereichen wie der Lebensmittel- und Getränke- oder Elektronikindustrie.

Zu Herstellung von Polyamidmembranen steht ein breites Spektrum von Verfahren zu Verfügung. In der Mehrzahl werden sogenannte Nass-Spinnverfahren angewandt, d.h. Verfahren, bei denen eine Lösung eines Polyamids in einem Lösemittel, dem auch Anteile eines Nichtlösers zugesetzt sein können, mit einem Nichtlöser in Kontakt gebracht wird. Bei der dabei einsetzenden, durch den Nichtlöser induzierten Koagulation wird die Membranstruktur ausgebildet.

Ein solches Verfahren wird beispielsweise in der US-A- 4 340 479, der DE-A-30 28 213 oder der DE-A-31 38 525 beschrieben, wobei als Lösemittel Ameisensäure und als Nichtlöser bzw. als Koagulationsmittel Wasser verwendet werden. Die US-A-3 876 738 geht von einem ähnlichen Prozess aus und erwähnt die Möglichkeit, dass zwischen Extrusion der Polymerlösung und Fällbad eine kurze Verdampfungsstrecke durchlaufen, also eine sogenannter Trocken-Nass-Spinnprozess angewendet werden kann. Ein solches Verfahren wird auch in der DE-A-25 54 922 beschrieben. Die EP-A-0 413 552 offenbart einen Nass-Spinnprozess, mittels dessen asymmetrische Polyamid Membranen mit kavernenförmigen Poren hergestellt werden. Als Lösemittel wird eine Alkohol/Salz-Lösung eingesetzt.

Ein weiteres Verfahren zur Herstellung von mikroporösen Polyamidmembranen basiert auf einem Prozess mit einer thermisch induzierten Phasentrennung. Bei diesen Verfahren wird zunächst bei erhöhten Temperaturen eine homogene Schmelzelösung des Polymers in einem Lösemittelsystem hergestellt, wobei die Polymerkomponente und das Lösemittelsystem ein binäres System bilden, das im flüssigen Aggregatzustand einen Bereich aufweist, in dem es als homogene Lösung vorliegt, und einen Bereich, in dem es eine Mischungslücke besitzt. Bei Abkühlung eines solchen Systems unter die Entmischungstemperatur kommt es zur Phasentrennung und schließlich zur Ausbildung einer porösen Polymerstruktur. Derartige Verfahren, bei denen u.a. Polyamide als membranbildende Polymere eingesetzt werden können, werden z.B. in der DE-A-32 05 289, der EP-A-0 133 882 oder der EP-A-0 309 136 beschrieben.

Es zeigt sich jedoch, dass die nach diesen bekannten Verfahren hergestellten Polyamidmembranen für Anwendungen, bei denen sie insbesondere unter erhöhten Temperaturen und in Gegenwart von Sauerstoff mit wässrigen Medien in Kontakt kommen, in der Regel nur bedingt einsatzfähig sind. Bei derartigen Anwendungen kommt es zu einer Degradation der Polyamide. Dies hat zur Folge, dass die Polyamidmembranen bei diesen Anwendungen eine nur ungenügende Standzeit aufweisen, da infolge des Polymerabbaus nach einiger Zeit die mechanische Stabilität der Membran nicht mehr gewährleistet ist und die Membranen zerfallen. Gleichzeitig ist zu beobachten, dass die für die genannten Anwendungen oftmals erforderliche Sterilisation mittels Heißdampf bereits nach wenigen Sterilisationszyklen zu einem Verlust der mechanischen Stabilität der Polyamidmembranen und damit zu deren Unbrauchbarkeit führt.

Die US-A-4 340 480 offenbart ebenfalls ein Verfahren zur Herstellung mikroporöser Polyamidmembranen mittels thermisch induzierter Phasentrennung. Im Unterschied zu den zuvor beschriebenen Prozessen, bei denen eine thermisch induzierte Phasentrennung zunächst in zwei flüssige Phasen erfolgt, werden gemäß der US-A-4 340 480 Polyamidlösungen eingesetzt, bei denen bei einer Abkühlung das Polymer aus der Lösung ausfällt, bei denen also eine flüssig-fest Phasentrennung vorliegt. Die Ausbildung der Membranstruktur selbst erfolgt bei der US-A-4 340 480 durch Koagulation mit einem Nichtlöser. Die US-A-4 340 480 erwähnt, dass das die eingesetzten Polymere auch Additive wie z.B. Antioxidationsmittel enthalten können. So habe man festgestellt, dass bestimmte Antioxidationsmittel die Standzeit von Polyamidmembranen unter hydrolytischen Bedingungen erhöht werden können. Angaben zu solchen Polyamidmembranen mit verbesserter Hydrolysestabilität werden in der US-A-4 340 480 jedoch nicht gemacht. Bevorzugt werden gemäß der US-A-4 340 480 Polymere ohne Additive eingesetzt.

In der US-A-4 274 965 werden permselektive Polyamidmembranen mit verbesserter Hydrolysestabilität und Sterilisierbarkeit beschrieben. Diese verbesserten Eigenschaften werden gemäß der US-A-4 274 965 durch Verwendung spezieller Lactam Terpolymerer erreicht. Bei der Polymerisation der Lactam Terpolymere können auch Additive wie z.B. Antioxidationsmittel zugesetzt werden. Die in der US-A-4 274 965 offenbarten permselektiven Membranen sind porenfreie Membranen insbesondere zu Einsatz in der Hemodialyse. Als Ultrafiltrationsmembranen oder als Mikrofiltrationsmembranen für Filtrationsaufgaben in Bereichen wie der Lebensmittel- und Getränke- oder Elektronikindustrie sind die Membranen der US-A-4 274 965 nicht verwendbar.

Daher besteht Bedarf an einem Verfahren zur Herstellung von mikroporösen Polyamidmembranen mit verbesserter Hydrolysestabilität sowie an derartigen Polyamidmembranen mit verbesserter Hydrolysestabilität, bei denen für die genannten Anwendungen in Kontakt mit wässrigen Medien unter erhöhten Temperaturen und in Gegenwart von Sauerstoff eine längere Standzeit und eine höhere Stabilität bei der Heißdampfsterilisation im Vergleich zu den bekannten bzw. nach den bekannten Verfahren hergestellten Polyamidmembranen realisiert wird.

Die erfindungsgemäß gestellte Aufgabe wird durch ein Verfahren zur Herstellung einer Polyamidmembran mit verbesserter Hydrolysestabilität gelöst, wobei das Verfahren die folgenden Schritte umfasst:

a) Herstellung einer homogenen Lösung von 10-90 Gew.-% eines aliphatischen Polyamids in 90-10 Gew.-% eines Lösemittelsystems, wobei das Gemisch aus dem Polyamid und dem Lösemittelsystem eine kritische Entmischungstemperatur und eine Erstarrungstemperatur aufweist und unterhalb der Entmischungstemperatur im flüssigen Aggregatzustand eine Mischungslücke,

b) Ausformen der Lösung zu einem Formkörper in einem Formwerkzeug, welches eine Werkzeugtemperatur oberhalb der kritischen Entmischungstemperatur aufweist,

c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-Flüssig-Flüssig-Phasentrennung in eine polymerreiche und eine polymerarme Phase und anschließend bei Unterschreiten der Erstarrungstemperatur Erstarrung der polymerreichen Phase zur Membranstruktur erfolgt,

d) Entfernen des Lösemittelsystems aus dem Formkörper,

dadurch gekennzeichnet, dass in der Lösung ein Antioxidationsmittel als Stabilisator für das Polyamid enthalten ist, welches bei der Phasentrenntemperatur im Lösemittelsystem im wesentlichen nicht löslich ist.

Es wurde überraschenderweise gefunden, dass sich bei Einhaltung der Bedingungen des erfindungsgemäßen Verfahrens Polyamidmembranen mit verbesserten Standzeiten in Anwendungen, bei denen diese mit wässrigen Medien unter Gegenwart von Sauerstoff in Kontakt stehen, wie z.B. mit heißem Wasser, und/oder mit verbesserter Stabilität bei der Heißdampfsterilisation herstellen lassen. Die Verwendung eines Antioxidationsmittels in einem Verfahren zur Herstellung einer Polyamidmembran auf Basis eines Prozesses mit thermisch induzierter Phasentrennung entsprechend dem Oberbegriff des Anspruchs 1 unter Einhaltung der Bedingung, dass das Antioxidationsmittel bei der Phasentrenntemperatur im Lösemittelsystem im wesentlichen nicht löslich ist, führt also in zu einer Verbesserung der Hydrolysebeständigkeit der Polyamidmembranen. Eine derartige Hydrolysebeständigkeit ist bislang bei Polyamidmembranen, die nach bekannten Prozessen mit thermisch induzierter Phasentrennung hergestellt wurden, nicht erreicht worden.

Die erfindungsgemäß gestellte Aufgabe wird des Weiteren durch eine Polyamidmembran mit verbesserter Hydrolysestabilität auf Basis eines aliphatischen Polyamids gelöst, bei der zumindest der überwiegende Teil der Wand zwischen den Oberflächen als Stützschicht mit einer mikroporösen, schwammartigen und offenporigen Struktur ausgebildet und frei von Makrovoids ist, und die dadurch gekennzeichnet ist, dass in der die Membranstruktur aufbauenden Polymermatrix ein zur Stabilisierung von Polyamiden wirksames Antioxidationsmittel in einer Konzentration zwischen 0,01 und 5 Gew.-%, bezogen auf das Polyamid, enthalten ist. Derartige Membranen sind bevorzugt mittels des erfindungsgemäßen Verfahrens herstellbar. Dabei zeigt sich überraschenderweise, dass mittels des erfindungsgemäßen Verfahrens die Anwesenheit des im Verfahren eingebrachten Stabilisators in der fertigen Polyamidmembran gewährleistet werden kann. Eine Analyse der erfindungsgemäß hergestellten Polyamidmembranen zeigt, dass sie das als Stabilisator eingebrachte Antioxidationsmittel in ihrer Polymermatrix enthalten.

Durch den in der erfindungsgemäßen bzw. erfindungsgemäß hergestellten Polyamidmembran enthaltenen Stabilisator zeigen diese eine Hydrolysestabilität, die gegenüber einer gleichartigen Polyamidmembran ohne diesen Stabilisator signifikant verbessert ist. In einer bevorzugten Ausführungsform weist die erfindungsgemäße bzw. die erfindungsgemäß hergestellte Polyamidmembran eine derart verbesserte Hydrolysestabilität auf, dass sie in luftgesättigtem 80°C heißem Wasser eine Standzeit von mindestens 100 Stunden und besonders bevorzugt von mindestens 200 Stunden ohne Verlust der mechanischen Stabilität besitzt. In einer weiteren bevorzugten Ausführungsform weist die erfindungsgemäße bzw. die erfindungsgemäß hergestellte Polyamidmembran eine derart verbesserte Hydrolysestabilität auf, dass sie einer wiederholten Heißdampfsterilisation bei mindestens 125°C in Gegenwart von Luftsauerstoff über mindestens 10 Zyklen und besonders bevorzugt über mindestens 15 Zyklen mit einer Dauer von jeweils 1 Stunde ohne Verlust der mechanischen Stabilität standhält. In einer ebenfalls bevorzugten Ausführungsform der vorliegenden Erfindung weist die erfindungsgemäß hergestellte bzw. die erfindungsgemäße Membran die zuvor genannten bevorzugten Hydrolysestabilitäten in Kombination auf.

Die Hydrolysestabilität der Polyamidmembran wird somit anhand der Standzeiten der Membran im luftgesättigten 80°C heißen Wasser bzw. anhand der Anzahl der Heißdampfsterilisationszyklen beurteilt, die erreicht werden, ohne dass ein Verlust der mechanischen Stabilität aufgrund eines Polymerabbaus auftritt. Hierbei wird im Rahmen der vorliegenden Erfindung die mechanische Stabilität als gegeben angesehen, solange die relative Lösungsviskosität LV des Polyamids $\geq 2$ ist. Ein Verlust der mechanischen Stabilität tritt dann auf und wird im Rahmen der vorliegenden Erfindung dann als gegeben angesehen, wenn die LV des die Membran aufbauenden Polyamids auf Werte < 2 fällt. Hierbei wird die relative Lösungsviskosität LV in 90 %iger Ameisensäure ermittelt.

Das erfindungsgemäße Verfahren beruht auf einem thermisch induzierten Phasenseparationsprozess mit flüssig-flüssig-Phasentrennung. Erfindungsgemäß bilden die Polymerkomponente und das Lösemittelsystem ein binäres System, das im flüssigen Aggregatzustand einen Bereich aufweist, in dem es als homogene Lösung vorliegt, und einen Bereich, in dem es eine Mischungslücke besitzt. Wird ein solches System aus dem Bereich, in dem es als homogene Lösung vorliegt, unter die kritische Entmischungs- oder Phasentrenntemperatur abgekühlt, so tritt zunächst eine flüssigflüssig Entmischung bzw. Phasentrennung in zwei flüssige Phasen auf, nämlich in eine polymerreiche und eine polymerarme Phase. Bei weiterer Abkühlung bis unter die Erstarrungstemperatur erstarrt die polymerreiche Phase zur dreidimensionalen Membranstruktur. Die Abkühlgeschwindigkeit hat dabei in Verbindung mit der Polymerkonzentration einen wesentlichen Einfluss auf die entstehende Porenstruktur. Ist die Abkühlgeschwindigkeit genügend groß, dass die flüssig-flüssig-Phasentrennung nicht unter thermodynamischen Gleichgewichtsbedingungen erfolgen kann sondern unter thermodynamischen Nichtgleichgewichtsbedingungen, jedoch andererseits dennoch relativ langsam, erfolgt die flüssig-flüssig-Phasentrennung etwa gleichzeitig mit der Ausbildung einer Vielzahl von Flüssigkeitströpfchen von im wesentlichen gleicher Größe. Das resultierende Polymergebilde weist dann eine schwammartige zellförmige und offenporige Mikrostruktur auf. Ist die Abkühlgeschwindigkeit deutlich höher, so wird das Polymer fest, bevor sich die meisten Flüssigkeitströpfchen ausbilden können. Hierbei entstehen dann netzwerkartige Mikrostrukturen. Die verschiedenartige Ausbildung solcher schwammartiger mikroporöser Strukturen über Prozesse mit thermisch induzierter flüssig-flüssig-Phasentrennung werden eingehend in der DE-A 27 37 745 beschrieben, auf deren Offenbarung sich ausdrücklich bezogen wird, und z.B. in R.E. Kesting: "Synthetic Polymeric Membranes", John Wiley & Sons, 1985, S. 261-264, dargestellt.

Das erfindungsgemäß eingesetzte Lösemittelsystem kann aus einem oder mehreren Lösern für das Polyamid bestehen. Hierbei wird im Rahmen der vorliegenden Erfindung unter einem Löser eine Verbindung verstanden, die Lösemittel für das Polyamid ist und in der das Polyamid bei Erwärmen bis höchstens zum Siedepunkt dieser Verbindung zu einer homogenen Lösung vollständig gelöst wird.

Vorzugsweise wird jedoch als Lösemittelsystem eine Mischung aus einer Verbindung A und einer Verbindung B verwendet, wobei als Verbindung A ein Löser für das Polyamid und als Verbindung B ein Nichtlöser für das Polyamid, ein Löser, der das Polyamid zwar löst, dessen Lösetemperatur in Bezug auf das Polyamid jedoch mindestens 50°C, vorzugsweise mindestens 100°C höher liegt als die Lösetemperatur der Verbindung A in Bezug auf das Polyamid, oder auch ein Quellmittel für das Polyamid eingesetzt wird. Unter einem Nichtlöser wird dabei eine Verbindung verstanden, welche das Polyamid in einer Konzentration von 1 Gew.-% in dem Nichtlöser beim Erwärmen bis höchstens zum Siedepunkt dieses Nichtlösers nicht zu einer homogenen Lösung auflöst.

Der Zusatz der Verbindung B zu einer nur aus der Verbindung A und dem Polyamid bestehenden Lösung verändert das Verhalten der Polyamidlösung bei Abkühlung. Bei Lösungen, bestehend aus dem Polyamid und der Verbindung A, die keine Mischungslücke aufweisen, wird erfindungsgemäß durch den Zusatz der Verbindung B ein System ausbildet, welches eine Mischungslücke im flüssigen Aggregatzustand aufweist. Bei Lösungen, bestehend aus der Verbindung A und dem Polyamid, die bereits eine Mischungslücke im flüssigen Aggregatzustand aufweisen, wird in der Regel durch die Zugabe der Verbindung B die Entmischungstemperatur heraufsetzt. Es kann jedoch je nach Art der Verbindung B auch auftreten, dass durch Zusatz der Verbindung B im unteren Konzentrationsbereich der Verbindung B mit zunehmender Konzentration der Verbindung B zunächst eine Absenkung der Entmischungstemperatur beobachtet wird, bevor bei weiterer Steigerung der Konzentration an Verbindung B ein Anstieg der Entmischungstemperatur gegenüber der nur aus der Verbindung A und dem Polymer bestehenden Lösung erfolgt.

Die eingesetzten Zusammensetzungen aus der Polymerkomponente, der Verbindung A und der Verbindung B, wobei die Verbindungen A und B zusammen das Lösemittelsystem ausbilden, müssen gemeinsam in eine einzige homogene flüssige Phase überführbar sein und eine kritische Entmischungstemperatur aufweisen, unterhalb derer eine Phasentrennung in zwei flüssige Phasen auftritt. Durch Zugabe der Verbindung B wird eine gezielte Steuerung der Porengröße und des Porenvolumens der erhaltenen porösen Strukturen ermöglicht.

Die Verbindung A kann zusätzlich mit einer oder mehreren Flüssigkeiten, insbesondere mit weiteren Lösern verschnitten sein. Auch die Verbindung B kann in Mischung mit einer oder mehreren weiteren Verbindungen, insbesondere weiteren Nichtlösern eingesetzt werden. Infolgedessen wird im Rahmen der vorliegenden Erfindung unter der Verbindung A nicht nur eine einzelne Verbindung verstanden, sondern auch eine Mischung verschiedener Löser. Ebenso wird unter der Verbindung B auch z.B. eine Mischung verschiedener Nichtlöser verstanden.

Die Entmischungs- oder Phasentrenntemperatur kann dabei auf einfache Weise festgestellt werden, indem zunächst 20 bis 50 g einer homogenen Lösung des Polyamids in dem zu untersuchenden Löser oder Lösemittelsystem hergestellt werden. Hierbei ist darauf zu achten, dass die Herstellung der Lösung möglichst schnell und insgesamt unter Bedingungen erfolgt, bei denen eine Degradation des Polyamids minimiert wird. Zweckmäßigerweise erfolgt die Herstellung der Lösung unter Luftausschluss, beispielsweise unter Stickstoffatmosphäre. Die so erhaltene Polyamidlösung wird dann auf eine Temperatur aufheizt, die ca. 20°C oberhalb der Lösetemperatur liegt. Direkt anschließend wird die Lösung mit einer Abkühlrate von ca. 10°C/min unter intensivem Rühren abgekühlt. Als Entmischungs- oder Phasentrenntemperatur wird dann die Temperatur bestimmt, bei der visuell eine beginnende Trübung feststellbar ist. Bei weiterer Abkühlung tritt bei Unterschreiten der Erstarrungstemperatur ein Festwerden der polymerreichen Phase ein.

Der zur Membranherstellung erforderliche Anteil an Polymer sowie das Verhältnis von Verbindung A zu Verbindung B im Lösemittelsystem lässt sich durch Erstellung von Phasendiagrammen mittels einfacher Versuche ermitteln. Derartige Phasendiagramme können nach bekannten Methoden entwickelt werden, wie sie z.B. von C.A. Smolders, J.J. van Aartsen, A. Steenbergen, Kolloid-Z. und Z. Polymere, 243 (1971), S. 14-20, beschrieben werden. In der Regel ist bei einem vorgegebenen Löser A der Anteil an Verbindung B in der Mischung aus der Polymerkomponente, der Verbindung A und der Verbindung B abhängig z.B. von der Stärke des Nichtlösecharakters, wenn als Verbindung B ein Nichtlöser eingesetzt wird. Bevorzugt ist der Anteil der Verbindung B im Lösemittelsystem 1 bis 45 Gew.-%.

Bevorzugt liegt der Polymeranteil des Gemischs, aus dem die Lösung ausgebildet wird, bei 10-50 Gew.-% und der Anteil des Lösemittelsystems bei 90-50 Gew.-%. Besonders bevorzugt liegt der Polymeranteil bei 10-30 Gew.-% und der Anteil des Lösemittelsystems bei 90-70 Gew.-%. Gegebenenfalls können der Polymerkomponente, dem Lösemittelsystem oder auch der Polymerlösung weitere Stoffe wie z.B. Keimbildungsmittel, UV-Absorber, Füllstoffe oder auch Verarbeitungshilfsmittel wie z.B. viskositätserhöhende Verdickungsmittel oder dergleichen als Additive zugegeben werden.

Für eine einfache Durchführung des erfindungsgemäßen Verfahrens ist es wünschenswert, wenn das eingesetzte Lösemittelsystem sich gegenüber dem Polyamid chemisch inert verhält. Dies bedeutet, dass das Lösemittelsystem im wesentlichen keinen Abbau des Polyamids bewirkt und dass es nicht mit dem Polyamid selbst reagiert. Jedoch kann sich aus den Anforderungen des erfindungsgemäßen Verfahrens, insbesondere auch aus der Bedingung, dass das Antioxidationsmittel bei der Phasentrenntemperatur im Lösemittelsystem im wesentlichen nicht löslich ist, ergeben, dass auf ein Lösemittelsystem oder einzelne Komponenten des Lösemittelsystems zurückgegriffen werden muss, die gegenüber dem Polyamid nicht inert sind. In diesen Fällen muss bei der Durchführung des erfindungsgemäßen Verfahrens z.B. durch kurze Verweilzeiten, intensive Mischleistung und/oder möglichst niedrige Lösetemperaturen dafür Sorge getragen werden, dass Veränderungen des Polyamids möglichst gering gehalten werden.

Die aus Polymerkomponente und dem Lösemittelsystem ausgebildete Polymerlösung wird mittels geeigneter Formwerkzeuge zum Formkörper ausgeformt, um schließlich eine Membran, vorzugsweise in Form einer Flachmembran oder Hohlfasermembran, zu erhalten. Dabei können übliche Formwerkzeuge wie Breitschlitzdüsen, Gießkästen, Rakel, profilierte Düsen, Ringschlitzdüsen oder Hohlfadendüsen eingesetzt werden.

Nach seiner Ausformung wird der Formkörper so mittels eines festen oder flüssigen Abkühlmediums abgekühlt, dass eine thermodynamische Nichtgleichgewichts-flüssig-flüssig-Phasentrennung im Formkörper, d.h. in der ausgeformten Polymerlösung erfolgt und im weiteren die Polymerstruktur erstarrt und verfestigt. Dabei ist das Abkühlmedium auf eine Temperatur unterhalb der Erstarrungstemperatur temperiert. Bei der Herstellung von Flachmembranen kann das Abkühlmedium ein fester Stoff bzw. eine feste Oberfläche sein, z.B. in Form einer Glasplatte oder einer Metallplatte oder in Form einer entsprechend temperierten bzw. gekühlten Kühlwalze, auf die der Formkörper abgelegt wird. Vorzugsweise hat das feste Abkühlmedium eine hohe Wärmeleitfähigkeit und besteht besonders bevorzugt aus einem metallischen Werkstoff. In einer vorteilhaften Ausgestaltung des erfindungsgemäßen Verfahrens wird jedoch ein Abkühlmedium eingesetzt, das eine Flüssigkeit ist.

Zur Einleitung einer thermodynamischen Nichtgleichgewichts-flüssig-flüssig-Phasentrennung muss die Temperatur des Abkühlmediums deutlich unterhalb der kritischen Entmischungstemperatur oder Phasentrenntemperatur der verwendeten Polymerlösung und im weiteren zur Erstarrung der polymerreichen Phase unterhalb der Erstarrungstemperatur liegen. Vorzugsweise weist das Abkühlmedium eine Temperatur auf, die um mindestens 50°C unterhalb der Phasentrenntemperatur liegt, und besonders bevorzugt eine Temperatur, die um mindestens 100 °C unterhalb der Phasentrenntemperatur liegt. Es ist auch möglich, die Abkühlung abgestuft in mehreren Schritten durchzuführen.

Es ist von Vorteil, wenn Austrittsfläche des Formwerkzeugs und Oberfläche des Abkühlmediums durch einen Spalt räumlich beabstandet sind, der von dem Formkörper vor dem Kontakt mit dem Abkühlmedium durchlaufen wird. Es kann sich dabei um einen Luftspalt handeln, der Spalt kann aber auch mit einer anderen gasförmigen Atmosphäre gefüllt sein, und er kann auch beheizt oder gekühlt sein. Die Polymerlösung kann aber auch nach Austritt aus dem Formwerkzeug direkt mit dem Abkühlmedium in Kontakt gebracht werden.

Vorzugsweise befindet sich im Falle der Verwendung eines flüssigen Abkühlmediums dieses in einem Schacht oder in einem Spinnrohr, den bzw. das der Formkörper zur Abkühlung dann durchläuft. Hierbei werden das Abkühlmedium und der Formkörper in der Regel in die gleiche Richtung durch den Schacht bzw. das Spinnrohr geführt. Formkörper und Abkühlmedium können mit gleicher oder unterschiedlicher linearer Geschwindigkeit durch das Spinnrohr geführt werden, wobei je nach Erfordernis entweder der Formkörper oder das Abkühlmedium die höhere lineare Geschwindigkeit aufweisen kann. Derartige Verfahrensvarianten werden beispielsweise in der DE-A-28 33 493 oder in der EP-A-133 882 beschrieben.

Die bei der Extrusion von Hohlfäden eingesetzte Innenfüllung kann gasförmig sein oder sie kann eine Flüssigkeit sein. Im Falle der Verwendung einer Flüssigkeit als Innenfüllung muss eine Flüssigkeit ausgewählt werden, welche die Polymerkomponente in der ausgeformten Polymerlösung unterhalb der kritischen Entmischungstemperatur der Polymerlösung im wesentlichen nicht löst. Zur Erzielung einer offenporigen Struktur an der inneren Oberfläche werden bevorzugt Innenfüllungen eingesetzt, die Löser für das verwendete Polyamid sind, wobei die zuvor genannte Bedingung einzuhalten ist, und/oder Temperaturen der Innenfüllung eingestellt, die unterhalb der Entmischungstemperatur der Polymerlösung liegen. Im übrigen können auch die gleichen Flüssigkeiten zum Einsatz kommen, wie sie auch als Abkühlmedium verwendet werden können. Die Innenfüllung kann mit dem Lösemittelsystem mischbar sein. Im Falle, dass die Innenfüllung gasförmig ist, kann es sich um Luft, einen dampfförmigen Stoff oder bevorzugt um Stickstoff oder andere Inertgase handeln.

Im Einzelfall kann die Porenstruktur der mittels des erfindungsgemäßen Verfahrens hergestellten Polyamidmembran auch durch einen Verzug der ausgeformten Polymerlösung unterhalb der Düse, d.h. insbesondere im Luftspalt beeinflusst werden, wobei der Verzug durch Einstellung einer Differenz zwischen der Austrittsgeschwindigkeit der Polymerlösung aus dem Formwerkzeug und der Geschwindigkeit der ersten Abzugseinrichtung für den abgekühlten Formkörper erzeugt wird.

Nach Abkühlung und Verfestigung der Polymerstruktur wird das Lösemittelsystem beispielsweise durch Extraktion aus dem Formkörper entfernt. Dabei werden zweckmäßigerweise solche Extraktionsmittel eingesetzt, die das Polymer bzw. die Polymeren nicht lösen, die jedoch mischbar mit dem Lösemittelsystem sind. Anschließend wird die extrahierte Polyamidmembran in der Regel bei erhöhten Temperaturen getrocknet, um das Extraktionsmittel aus der Membran zu entfernen. Vor und/oder nach der Entfernung zumindest eines wesentlichen Teils des Lösemittelsystems kann eine Verstreckung der Membran erfolgen, um insbesondere die Trenneigenschaften der Polyamidmembran in gezielter Weise zu modifizieren.

Insbesondere nach einer Verstreckung der Polyamidmembran und oftmals auch nach ihrer Trocknung ist eine Fixierung der Membran von Vorteil, um ein Schrumpfen bei der Anwendung zu vermeiden. Zur Fixierung können dabei die in der Membranherstellung üblichen Methoden angewendet werden.

Mit Blick auf den vielfachen Einsatz von Polyamidmembranen in Anwendungen mit wässrigen Medien weisen die im Rahmen der vorliegenden Erfindung eingesetzten Antioxidationsmittel, wie später noch ausgeführt wird, bevorzugt im wesentlichen keine Löslichkeit in Wasser auf. Daher werden im erfindungsgemäßen Verfahren zur Extraktion des Lösemittelsystems aus dem Formkörper und damit zur Freilegung der Membranstruktur vorzugsweise wässrige Medien und besonders bevorzugt Wasser eingesetzt. Hierzu ist erforderlich, dass das eingesetzte Lösemittelsystem wasserlöslich ist. Bevorzugt werden daher im erfindungsgemäßen Verfahren wasserlösliche Lösemittelsysteme eingesetzt. Hierbei ist es auch möglich, dass einzelne Komponenten des Lösemittelsystems nicht mit Wasser mischbar sind, solange das Lösemittelsystem in seiner Gesamtheit wasserlöslich ist.

Bei Lösemittelsystemen, die nur aus einer Löserkomponente bestehen, ist für Polyamid 6 und für das Copolymer Polyamid 6/12 Diglycerin ein bevorzugter Löser. Bei Lösemittelsystemen, die aus einer Mischung aus einer Verbindung A und einer Verbindung B bestehen, werden als Verbindung A bevorzugt Diglycerin, Glycerin, Glykol, Diglycol, Monoacetin, Caprolactam oder Butyrolacton und als Verbindung B bevorzugt Polyethylenglykole verschiedenen Molekulargewichts eingesetzt. Besonders gute Ergebnisse werden mit Lösemittelsystemen erzielt, die aus einer Mischung aus Diglycerin und einem Polyethylenglykol bestehen, oder solchen, die als Verbindung A eine Mischung aus Caprolactam und Butyrolacton und als Verbindung B ein Polyethylenglykol oder Glycerintriacetat enthalten.

Es ist dabei möglich, dass bei bestimmten Lösemittelsystemen, die aus einer Mischung einer Verbindung A und einer Verbindung B bestehen, bei geringen Anteilen der Verbindung B der Stabilisator löslich ist. Beispielsweise ist es bei Verwendung von Caprolactam oder Butyrolacton als Verbindung A möglich, dass bei Einsatz von Polyethylenglykol (PEG) 600 als Verbindung B wegen der nur relativ geringen zugebbaren Menge an PEG 600 ein eingesetzter Stabilisator, z.B. Irganox 1098, auch bei der Phasentrenntemperatur im Lösemittelsystem löslich ist. Eine solche Kombination erfüllt aber nicht die erfindungsgemäß geforderten Verfahrensbedingungen. Jedoch kann durch Verwendung des in höherer Konzentration zugebbaren PEG 200 mit niedrigerem Molekulargewicht anstelle des PEG 600 ein System geschaffen werden, das eine erfindungsgemäße Durchführung des Verfahrens erlaubt.

Es gleichfalls von Vorteil, wenn das Abkühlmedium aus einem wässrigen Medium besteht, und von besonderem Vorteil, wenn als Abkühlmedium Wasser verwendet wird. Durch die Verwendung wässriger Abkühlmedien und/oder wässriger Extraktionsmittel ist bei der Membranherstellung eine unerwünschte Extraktion des Stabilisators aus der Membran zumindest weitgehend vermeidbar und damit die Wirkung des Stabilisators zur Verbesserung der Hydrolysestabilität der Polyamidmembran gegeben. Hierdurch ist es möglich, dass das Antioxidationsmittel zumindest nahezu quantitativ in der Polyamidmembran verbleibt.

Zur Erzielung der gewünschten Stabilisatorwirkung im Hinblick auf die Hydrolysebeständigkeit ist bevorzugt, wenn die Konzentration des im erfindungsgemäßen Verfahren als Stabilisator eingesetzten Antioxidationsmittels zwischen 0,01 und 5 Gew.-%, bezogen auf das Polyamid, und besonders bevorzugt zwischen 0,05 und 2 Gew.-% liegt. Besonders gute Ergebnisse werden erzielt, wenn das Antioxidationsmittel in einer Konzentration zwischen 0,2 und 1 Gew.-%, bezogen auf das eingesetzte Polyamid, beträgt. Durch geeignete Auswahl der Bedingungen im erfindungsmäßen Verfahren lässt sich erreichen, dass sich der eingesetzte Stabilisator im wesentlichen quantitativ in der resultierenden Polyamidmembran wiederfinden lässt.

Hinsichtlich der Einbringung des Antioxidationsmittels in die aus dem Polyamid und dem Lösemittelsystem bestehende Lösung sind verschiedene Vorgehensweisen möglich. So kann beispielsweis ein Polyamid verwendet werden, das bereits ein Antioxidationsmittel enthält, wenngleich die Auswahl der hierzu erhältlichen Produkte, insbesondere auch unter Berücksichtigung der Anforderung bzgl. der Unlöslichkeit im Lösemittelsystem bei der Phasentrenntemperatur, eingeschränkt ist. In einer bevorzugten Ausgestaltung des erfindungsgemäßen Verfahrens wird aus dem Polyamid, vorzugsweise in Granulatform, und dem ausgewählten Antioxidationsmittel eine Trockenmischung ("dry-blend") hergestellt, bei der das Antioxidationsmittel in Pulverform auf das Polyamidgranulat aufpaniert wird. Diese Trockenmischung wird dann in einem Extruder aufgeschmolzen und innig vermischt. Anschließend wird aus dem aufgeschmolzenen, nun das Antioxidationsmittel enthaltenen Polyamid und dem Lösemittelsystem bei Temperaturen oberhalb der Entmischungstemperatur eine homogene Polyamidlösung hergestellt.

Als das die erfindungsgemäße Membran ausbildende bzw. als das im erfindungsgemäßen Verfahren verwendete Polyamid sind die für Polyamidmembranen üblicherweise verwendeten Polyamide geeignet. So können Polyamid-Homopolymere wie z.B. Polyamid 6, Polyamid 6.6, Polyamid 6.1 oder Polyamid 4.6, Polyamid 11 oder Polyamid 12, aber auch Polyamid-Copolymere wie z.B. solche auf Basis Polyamid 6/12 eingesetzt werden. Vorzugsweise liegt das Zahlenmittel des Molekulargewichts der erfindungsgemäß eingesetzten Polyamide zwischen 20000 und 60000 Dalton. Derartige Polyamide weisen eine nach der oben angegebenen Methode ermittelte relative Lösungsviskosität LV zwischen ca. 2,5 und 5 auf. Ebenso sind im Rahmen der vorliegenden Erfindung Polyamide mit hoher Wärmeformbeständigkeit bevorzugt, die eine Heißdampfsterilisation der daraus bestehenden Polyamidmembran bei Temperaturen von mindestens 130°C ohne Veränderung der Membranstruktur zulassen. Für die vorliegende Erfindung besonders bevorzugt ist Polyamid 6 als das die Membran ausbildende Polymer.

Hinsichtlich geeigneter Antioxidationsmittel oder Antioxidantien kann auf übliche, zur Stabilisierung von Polyamiden wirksame Antioxidationsmittel zurückgegriffen werden, wie sie z. B. in Übersichten in Ullmanns Encyklopädie der technischen Chemie, 4. Aufl., Bd. 8, S. 19-45, Verlag Chemie GmbH, Weinheim 1974, oder in G.W. Becker, D. Braun (Hrsg.): Kunststoff-Handbuch, 3. Thermoplaste, 4. Polyamide, S. 75-84, Carl Hanser Verlag, München-Wien 1998, zu finden sind, solange diese Antioxidantien die erfindungsgemäß gestellten Bedingungen erfüllen. Dabei können im Rahmen der vorliegenden Erfindung als Stabilisator einzelne Antioxidationsmittel, aber auch Kombinationen mehrerer Antioxidationsmittel auch unterschiedlicher Substanzgruppen eingesetzt werden.

Vorzugsweise ist das in der erfindungsgemäßen Polyamidmembran enthaltene bzw. das im erfindungsgemäßen Verfahren verwendete Antioxidationsmittel ein sterisch gehindertes Phenol. Besonders gute Ergebnisse wurden mit Pentaerythritol Tetrakis (3-(3,5-di-tert-butyl-4-hydroxyphenyl)propionat (CAS-Nr. 6683-19-8; erhältlich als Ciba® Irganox® 1010), 3,3',3'',5,5',5''-Hexa-tert-butyl-$\alpha$,$\alpha$',$\alpha$''-(mesitylen-2,4,6-triyl)tri-p-kresol (CAS-Nr. 1709-70-2; erhältlich als Ciba® Irganox® 1330) oder N,N'-Hexan-1,6-diylbis (3-(3,5-di-tert-butyl-4-hydroxyphenylpropionamid)) (CAS-Nr. 23128-74-7; erhältlich als Ciba® Irganox® 1098) als Antioxidationsmittel erzielt. Die sterisch gehinderten Phenole können auch in Mischungen untereinander oder vorzugsweise zusammen mit Phosphiten eingesetzt werden.

Bevorzugt weist das in der erfindungsgemäßen Membran enthaltene bzw. im erfindungsgemäßen Verfahren eingesetzte Antioxidationsmittel im wesentlichen keine Löslichkeit in Wasser auf. Als Grenze wird eine Löslichkeit von ≤0,01g/100 g Wasser bei 20°C angesehen. Durch das Antioxidationsmittel sollte das Erscheinungsbild der Polyamidmembran, wie z.B. deren Farbe, nicht beeinträchtigt werden.

In der erfindungsgemäßen bzw. erfindungsgemäß hergestellten Polyamidmembran ist der Stabilisator in der die Membranstruktur aufbauenden Polymermatrix enthalten. Im Unterschied zu einer nachträglichen Auftragung eines Stabilisators auf die Oberfläche einer Polyamidmembran nach deren Herstellung führt die Einbringung des Stabilisators in die Polymermatrix zu einer dauerhaften Wirkung des Stabilisators und damit zu den erfindungsgemäß geforderten dauerhaften Hydrolysestabilitäten. Zur optimalen Entfaltung seiner Wirkung ist das Antioxidationsmittel in dem die Membran ausbildenden Polyamid fein dispers verteilt oder gelöst.

Für eine wirksame Stabilisierung der erfindungsgemäßen Polyamidmembran ist es erforderlich, dass eine ausreichende Menge an Stabilisator zur Vermeidung eines Polymerabbaus zur Verfügung steht. Die erfindungsgemäße Polyamidmembran enthält daher zwischen 0,01 und 5 Gew.-%, bezogen auf das Polyamid, und bevorzugt zwischen 0,05 und 2 Gew.-% an Stabilisator. Besonders gute Ergebnisse werden erzielt, wenn das Antioxidationsmittel in einer Konzentration von 0,1 bis 1 Gew.-%, bezogen auf das eingesetzte Polyamid, vorliegt.

Mittels des erfindungsgemäßen Verfahrens lassen sich Polyamidmembranen mit unterschiedlichen Porenstrukturen über dem Querschnitt der Membranwand herstellen. So können Membranen mit über die Wand im wesentlichen isotropen Strukturen hergestellt werden, d.h. mit einer Wand, bei der die Größe der Poren in alle Raumrichtungen im wesentlichen konstant ist, jedoch auch solche Membranen, mit einer nicht isotropen, einer symmetrischen oder einer asymmetrischen Porenstruktur. Die erfindungsgemäß hergestellten bzw. erfindungsgemäßen Polyamidmembranen können auch an mindestens einer ihrer Seiten eine Schicht mit wesentlich dichterer Porenstruktur oder eine Haut aufweisen. Zumindest der überwiegende Teil der Wand zwischen den Oberflächen der erfindungsgemäßen bzw. der erfindungsgemäß hergestellten Polyamidmembranen ist als Stützschicht mit einer mikroporösen, schwammartigen, und offenporigen Struktur ausgebildet und frei von Makrovoids, also frei von solchen Poren, die in der Literatur auch häufig als Fingerporen oder Kavernen bezeichnet werden.

Die Erfindung wird anhand der nachfolgenden Beispiele näher erläutert. In diesen Beispielen wurden die folgenden Methoden zur Charakterisierung der Eigenschaften der erhaltenen Polyamidmembranen angewandt:

Bestimmung der Standzeit in 80°C heißen, luftgesättigtem Wasser (Abbautest):

Zur Ermittlung der Hydrolysestabilität der Polyamidmembranen anhand der Standzeit im 80°C heißem, luftgesättigtem Wasser werden in einem entsprechend bemessenen Kolben mit Rückflusskühler 300 g Wasser vorgelegt und auf 80°C aufgeheizt. Zur Sättigung des Wassers mit Luftsauerstoff wird Luft über eine in den Kolben unter die Wasseroberfläche eingeführte Kapillare intensiv in das Wasser einperlen lassen.

Entsprechend dem geplanten Probeentnahmeplan wird eine ausreichende Anzahl ca. 2-5 cm langer Membranprobestücke (bei Flachmembranen werden dabei ca. 1 cm breite Streifen verwendet) in das erhitzte Wasser eingelegt. Nach verschiedenen Verweilzeiten werden Proben von jeweils ca. 0,5 g aus dem Kolben entnommen, mit destilliertem Wasser gespült und bei ca. 50°C im Vakuumtrockenschrank getrocknet. Anschließend erfolgt die Beurteilung der Proben hinsichtlich ihrer mechanischen Stabilität und hinsichtlich der relativen Viskosität.

Bestimmung der Stabilität bei Heißdampfsterilisation (Heißdampfsterilisationstest):

Zur Überprüfung der Hydrolysestabilität der Polyamidmembranen bei der Heißdampfsterilisation wurden die Polyamidmembranproben im Druckbehälter unter Anwesenheit von Luftsauerstoff einer mehrfachen Heißdampfbehandlung unterzogen. Hierzu wurden in einen Druckbehälter mit ca. 200 ml Inhalt und einer verschließbaren Einlassöffnung Membranproben so hängend auf einem Halterungsgestell vor gelegt, dass diese den Boden des Druckbehälters nicht berührten. Die Proben waren dabei so dimensioniert, dass für die einzelnen, nach dem Probeentnahmeplan vorgesehenen Probeentnahmen Proben von ca. 0,5 g entnommen werden konnten. Der Boden des Druckbehälters wurde mit Wasser bedeckt.

Nach Einhängen der Proben und Verschließen des Druckbehälters wurde der Druckbehälter in einem Heizbad innerhalb von 15-20 Minuten auf die gewünschte Sterilisationstemperatur (mindestens 125°C) aufgeheizt und 1 Stunde auf der Sterilisationstemperatur gehalten. Danach wurde innerhalb von ca. 10 Minuten auf 80°C abgekühlt und anschließend der Druckbehälter zu Probenkontrolle und zur Zuführung frischer Luft geöffnet. Je nach Probenahmeplan wurden dabei Proben z.B. zur Bestimmung der LV entnommen.

Danach wurde ein neuer Sterilisationszyklus, bestehend aus Aufheizphase, Haltephase bei Sterilisationstemperatur und Abkühlphase, begonnen. Wichtig war die Zuführung frischer Luft vor Beginn eines jedem Sterilisationszyklus.

Bei einer ersten erkennbaren Schädigung der Membranproben z.B. bei einer bereits geringen mechanischen Belastung wurde der Test beendet und die Anzahl der Sterilisationszyklen bis zum Auftreten einer Schädigung als diejenige Anzahl der Sterilisationszyklen ermittelt, der die Membranprobe ohne Verlust der mechanischen Stabilität bzw. ohne Unterschreiten einer LV von 2 standhält.

Bestimmung der relativen Lösungsviskosität:

Zur Bestimmung der relativen Lösungsviskosität wurden 250 mg Polymer bzw. Membran in 25 ml 90%-iger Ameisensäure während 1 Stunde bei Raumtemperatur unter Rühren gelöst. Mittels Ubbelohde-Viskosimeter, Typ I-C (Konstante: 0,03188) wurden die Durchlaufzeit der Polymerlösung und die Durchlaufzeit des Lösemittels (Ameisensäure) in sec bei 25°C Messtemperatur ermittelt.

Die relative Viskosität LV wurde dann nach der Beziehung

$$LV = \frac{\text{Durchlaufzeit der Polymerlösung}}{\text{Durchlaufzeit Lösemittel (90\%-ige Ameisensäure)}}$$

ermittelt.

Beispiel 1:

Zur Herstellung einer Membran auf Basis Polyamid 6 wurde eine homogene Lösung aus Polyamid 6 des Typs AKULON F 136E (Fa. DSM) mit einem Zusatz des Antioxidationsmittels Irganox® 1098 (Fa. Ciba Specialty Chemicals) in einem Lösemittelsystem, bestehend aus Diglycerin und Polyethylenglykol PEG 600 im Verhältnis 95:5 hergestellt. Zur Realisierung eines möglichst geringen Abbaus des Polyamids wurde unter möglichst schonenden Bedingungen hinsichtlich Verweilzeiten und Temperaturen sowie unter Verwendung von im wesentlichen wasserfreien Rohstoffen gearbeitet.

Aus AKULON F 136E Granulat und 0,4 Gew.-%, bezogen auf das Polyamid, des Antioxidationsmittels Irganox® 1098 wurde zunächst eine Trockenmischung durch "Aufpanieren" des Irganox® 1098-Pulvers auf das Polymergranulat hergestellt. Die Trokkenmischung wurde in einem Extruder bei ca. 240-250°C aufgeschmolzen und mittels einer Zahnradpumpe in einen kleinvolumigen, auf 190°C beheizten Mischer mit hoher Scherwirkung dosiert. In diesen Mischer wurde gleichzeitig das auf 170°C temperierte Lösemittelsystem dosiert, wobei die Dosiereinstellungen für die Polyamidschmelze und das Lösemittelsystem so gewählt wurden, dass eine Polymerlösung mit ca. 22 Gew.-% Polyamid resultierte.

Die den Mischer verlassende homogene Polyamidlösung wurde filtriert, mit einer Lösungspumpe einem auf ca. 200°C beheizten Gießkasten zugeführt und anschließend auf eine auf ca. 75 °C temperierte Gießwalze mit einer Streichdicke von ca. 140 µm zu einem Formkörper ausgestrichen. Nach Passieren einer Luftstrecke wurde der Formkörper in ein 75°C warmes Wasser enthaltendes Abkühlbad eingetaucht, um so die fertige Membranstruktur zu erhalten. Die so ausgebildete Polyamid Flachmembran wurde mit 90°C warmem VE-Wasser gewaschen, geringfügig verstreckt, anschließend auf einem Walzentrockner getrocknet und dann fixiert.

Die erhaltene Membran hatte eine mikroporöse schwammartige Porenstruktur, war spontan mit Wasser benetzbar und besaß eine Dicke von ca. 130 µm sowie einen über Blaspunktsmessung mit Isopropanol ermittelten maximalen Porendurchmesser $PG_{max}$ von 0,45 µm. Die Bestimmung des maximalen Porendurchmessers $PG_{max}$ erfolgte nach der in der EP-B 0 361 085 beschriebenen Blaspunktmethode. Im Abbautest war nach einer Behandlungszeit von ca. 500 Stunden in luftdurchströmtem Wasser bei 80°C noch kein Verlust der mechanischen Stabilität der Membran zu erkennen; die relative Lösungsviskosität betrug dann ca. 2,8. Im Heißdampfsterilisationstest (125°C) wies die Membran auch nach 15 Sterilisationszyklen noch eine ausreichende mechanische Stabilität auf; die relative Lösungsviskosität LV betrug dann 2,49.

Zur Bestimmung des Gehalts an Stabilisator in der Polyamidmembran gemäß diesem Beispiel wurde eine Membran-Probe im Soxleth mit Methanol extrahiert (Siedetemperatur/8 Std.) Aus dem mittels UV-VIS-Spektroskopie im Extrakt bestimmten Gehalt an Irganox® 1098 wurde durch Umrechnung eine Konzentration im Bereich von 0,4 Gew.-% Irganox® 1098 in der Membran ermittelt.

Vergleichsbeispiel 1:

Es wurde wie in Beispiel 1 vorgegangen mit der Ausnahme, dass dem eingesetzten Polyamid 6 (AKULON F 136E) kein Stabilisator zugesetzt wurde.

Die erhaltene Membran besaß eine Dicke von ca. 140 µm sowie eine über Blaspunktsmessung mit Isopropanol ermittelten maximalen Porendurchmesser $PG_{max}$ von 0,48 µm. Im Abbautest war die nicht stabilisierte Membran nach einer Behandlungszeit von ca. 56 Stunden in luftdurchströmtem Wasser bei 80°C zerfallen; die relative Lösungsviskosität LV war <2. Im Heißdampfsterilisationstest (125°C) war die nicht stabilisierte Membran bereits nach 3 Sterilisationszyklen brüchig (LV<2).

Beispiel 2:

Es wurde wie in Beispiel 1 vorgegangen, wobei als Ausgangsmaterial ein Polyamid-Copolymer der Type Grilon CR 9 HV (Polyamid 6/12 der Fa. Ems-Chemie), dem 0,4 Gew.-% des Antioxidationsmittels Irganox® 1098 zugesetzt wurden. Als Lösemittelsystem wurde eine Mischung von Diglycerin und Polyethylenglykol PEG 400 im Verhältnis 70:30 verwendet.

Die Polymerkomponente wurde bei ca. 230-235°C aufgeschmolzen und zusammen mit dem auf 170°C temperierten Lösemittelsystem in dem auf ca. 195°C beheizten Mischer zu einer klaren und homogenen Lösung verarbeitet. Die Polymerkonzentration der Lösung wurde auf ca. 29 Gew.-% eingestellt. Die Lösung wurde filtriert, mittels einer Lösungspumpe einem auf 90°C temperierten Gießkasten zugeführt und auf eine ca. 50°C temperierte Gießwalze zu einem ca. 140 µm dicken Film ausgestrichen. Die Abkühlung und die damit verbundene Ausbildung der Flachmembran erfolgte in einem auf ca. 50°C temperierten Wasser-Abkühlbad. Nach Extraktion des Lösemittelsystems mittels VE-Wasser bei ca. 90°C wurde die Flachmembran geringfügig verstreckt, danach auf einem Walzentrockner getrocknet und anschließend fixiert.

Die erhaltene mikroporöse Flachmembran hatte eine Dicke von ca. 140 µm und eine maximale Porengröße $PG_{max}$ von 0,76 µm. Nach einer Behandlungszeit von 200 Stunden im Abbautest war noch kein sichtbarer Defekt an der Membran zu erkennen, was mit einer relativen Lösungsviskosität LV von >2 einherging.

Vergleichsbeispiel 2:

Es wurde wie in Beispiel 2 vorgegangen mit der Ausnahme, dass dem eingesetzten Polyamid 6/12 (Grilon CR 9 HV) kein Stabilisator zugesetzt wurde.
Die erhaltene Membran entsprach in ihrer Charakteristik der in Beispiel 2 hergestellten. Im Abbautest wies die nicht stabilisierte Membran nach einer Behandlungszeit von ca. 68 Stunden in luftdurchströmtem Wasser bei 80°C Defekte auf; die relative Lösungsviskosität LV war dann <2.

Beispiel 3:

Analog der in Beispiel 1 beschriebenen Vorgehensweise wurde aus AKULON F 136E Granulat und 0,4 Gew.-%, bezogen auf das Polyamid, des Antioxidationsmittels Irganox® 1098 zunächst eine Trockenmischung durch "Aufpanieren" des Irganox® 1098-Pulvers auf das Polymergranulat hergestellt. Die Trockenmischung wurde in einem Extruder bei ca. 240°C aufgeschmolzen und mittels einer Zahnradpumpe in einen kleinvolumigen, auf 170°C beheizten Mischer mit hoher Scherwirkung dosiert. In diesen Mischer wurde gleichzeitig das auf 135°C temperierte Lösemittelsystem dosiert, wobei die Dosiereinstellungen für die Polyamidschmelze und das Lösemittelsystem so gewählt wurden, dass eine Polymerlösung mit ca. 18 Gew.-% Polyamid resultierte. Als Lösemittelsystem wurde in diesem Fall eine Mischung aus Glycerin und Polyethylenglykol PES 600 im Verhältnis 85:15 eingesetzt, dem zur Erleichterung der Ausformung der späteren Hohlfasermembran 0,2 Gew.-%, bezogen auf das Lösemittelsystem, des Verdickungsmittels Carbopol 940 (Fa. Goodrich) zugegeben worden waren.
Die den Mischer verlassende homogene Polyamidlösung wurde filtriert und mit einer Lösungspumpe einer auf ca. 180°C beheizten Hohlfadendüse zugeführt (Durchmesser: Düsenbohrung: 925 μm, Düsennadel außen/innen: 544 μm/330 μm). Zur Lumenausbildung wurde eine flüssige Innenfüllung aus Glycerin und PEG 600 mit der Zusammensetzung 1:1 eingesetzt. Die ausgeformte Lösung wurde nach Durchlaufen eines Luftspalts mittels eines Abkühlbades aus auf 50°C temperiertem Wasser abgekühlt, wodurch die Hohlfasermembran ausgebildet wurde. Diese wurde mit heißem Wasser extrahiert und anschließend getrocknet. Die resultierende Hohlfasermembran hatte eine mikroporöse Struktur und einen maximalen Porendurchmesser $PG_{max}$ von 0,87 μm.
Im Abbautest war die erhaltene Hohlfasermembran nach einer Behandlungszeit von ca. 200 Stunden noch gebrauchsfähig, d.h. es war nach dieser Zeit noch kein Verlust der mechanischen Stabilität der Membran feststellbar. Im Heißdampfsterilisationstest (125°C) war die Membran auch nach 15 Sterilisationszyklen noch intakt (LV=2,49).

Vergleichsbeispiel 3:

Es wurde wie in Beispiel 3 vorgegangen mit der Ausnahme, dass dem eingesetzten Polyamid 6 (AKULON F 136E) kein Stabilisator zugesetzt wurde.
Die erhaltene nicht stabilisierte Polyamid-Hohlfasermembran zerfiel im Abbautest nach einer Behandlungszeit von ca. 70 Stunden. Im Heißdampfsterilisationstest (125°C) war die nicht stabilisierte Membran bereits nach 3-4 Sterilisationszyklen brüchig (LV<2).

Beispiel 4:

Entsprechend der in Beispiel 3 beschriebenen Vorgehensweise wurde eine Polyamid-Hohlfasermembran hergestellt. Als Polyamid 6 wurde AKULON M258 (Fa. DSM) eingesetzt, dem als Stabilisator 0,5 Gew.-% des Antioxidationsmittels Irganox® 1010 (Fa. Ciba Specialty Chemicals) zugesetzt wurden. Als Lösemittelsystem wurde eine Mischung aus Glycerin und Äthylenglykol im Verhältnis 80:20 mit einem Zusatz von 0,2 Gew.-% des Verdickungsmittels Carbopol 940 (Fa. Goodrich). Als Lumenfüllung diente eine Mischung aus Glycerin und PEG 300 im Verhältnis 1:1. Die Temperatur des als Abkühlmedium verwendeten Wassers betrug 40°C; die Abzugsgeschwindigkeit betrug 22 m/min.
Die erhaltene Hohlfasermembran hatte einen $PG_{max}$ von 0,57 μm. Für die unbehandelte Membran wurde eine relative Viskosität LV von 4,15 ermittelt.
Im Abbautest wies die Hohlfasermembran gemäß diesem Beispiel auch nach 250 Stunden noch eine LV von 4,02 auf und war mechanisch stabil. Im Heißdampfsterilisationstest überstand die Membran 15 Zyklen ohne Verlust der mechanischen Stabilität; die LV betrug nach 15 Zyklen 2,49.

Vergleichsbeispiel 4:

Es wurde wie in Beispiel 4 vorgegangen mit der Ausnahme, dass dem eingesetzten Polyamid 6 (AKULON M258) kein Stabilisator zugesetzt wurde.
Die erhaltene nicht stabilisierte Polyamid-Hohlfasermembran, die vor der Prüfung eine LV von ca. 4,05 aufwies, zerfiel im Abbautest nach einer Behandlungszeit von ca. 33 Stunden (LV<2). Im Heißdampfsterilisationstest (125°C) zerfiel die nicht stabilisierte Membran bereits nach 3 Sterilisationszyklen und hatte danach eine LV von 1,63.

Vergleichsbeispiel 5:

Es wurde wie in Vergleichsbeispiel 1 eine nicht stabilisierte Membran hergestellt mit dem Unterschied, dass als Polyamid 6 Ultramid B5 (Fa. BASF) eingesetzt wurde, welches mit einem Zahlenmittel des Molekulargewichts ($M_N$) von ca. 50000 ein höheres Molekulargewicht aufwies als das im Beispiel 1 und Vergleichsbeispiel 1 verwendete AKULON F 136E.

Die erhaltene Membran besaß eine Dicke von ca. 140 µm sowie eine über Blaspunktsmessung mit Isopropanol ermittelten maximalen Porendurchmesser $PG_{max}$ von 0,67 µm. Im Abbautest war die nicht stabilisierte Membran trotz des hohen Ausgangs-Molekulargewichts bereits nach einer Behandlungszeit von ca. 44 Stunden in luftdurchströmtem Wasser bei 80°C völlig zerfallen; die relative Lösungsviskosität LV war <2. Im Heißdampfsterilisationstest (125°C) war die nicht stabilisierte Membran bereits nach 3 Sterilisationszyklen brüchig (LV<2).

**Patentansprüche**

1. Verfahren zur Herstellung einer hydrolysestabilen Polyamidmembran, wobei das Verfahren die folgenden Schritte aufweist:

   a) Herstellung einer homogenen Lösung von 10-90 Gew.-% eines aliphatischen Polyamids in 90-10 Gew.-% eines Lösemittelsystems, wobei das Gemisch aus dem Polyamid und dem Lösemittelsystem eine kritische Entmischungstemperatur und eine Erstarrungstemperatur aufweist und unterhalb der Entmischungstemperatur im flüssigen Aggregatzustand eine Mischungslükke,
   b) Ausformen der Lösung zu einem Formkörper in einem Formwerkzeug, welches eine Werkzeugtemperatur oberhalb der kritischen Entmischungstemperatur aufweist,
   c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichtsflüssig-flüssig-Phasentrennung in eine polymerreiche und eine polymerarme Phase und anschließend bei Unterschreiten der Erstarrungstemperatur Erstarrung der polymerreichen Phase zur Membranstruktur erfolgt,
   d) Entfernen des Lösemittelsystems aus dem Formkörper,

   **dadurch gekennzeichnet, dass** in der Lösung ein Antioxidationsmittel als Stabilisator für das Polyamid enthalten ist, welches bei der Phasentrenntemperatur im Lösemittelsystem im wesentlichen nicht löslich ist.

2. Verfahren nach Anspruch 1, **dadurch gekennzeichnet, dass** als Lösemittelsystem eine Mischung aus einer Verbindung A und einer Verbindung B verwendet wird, wobei als Verbindung A ein Löser und als Verbindung B ein Nichtlöser für das Polyamid, ein Löser, der das Polyamid zwar löst, dessen Lösetemperatur in Bezug auf das Polyamid jedoch mindestens 50°C höher liegt als die Lösetemperatur der Verbindung A in Bezug auf das Polyamid, oder ein Quellmittel für das Polyamid eingesetzt wird.

3. Verfahren nach einem oder mehreren der Ansprüche 1 oder 2, **dadurch gekennzeichnet, dass** das Lösemittelsystem wasserlöslich ist.

4. Verfahren nach einem oder mehreren der Ansprüche 1 bis 3, **dadurch gekennzeichnet, dass** als Abkühlmedium Wasser verwendet wird.

5. Verfahren nach einem oder mehreren der Ansprüche 1 bis 4, **dadurch gekennzeichnet, dass** ein Polyamid mit einem Zahlenmittel des Molekulargewichts zwischen 20000 und 60000 Dalton eingesetzt wird.

6. Verfahren nach einem oder mehreren der Ansprüche 1 bis 5, **dadurch gekennzeichnet, dass** ein Polyamid eingesetzt wird, welches eine Heißdampfsterilisation der daraus hergestellten Polyamidmembran bei Temperaturen von mindestens 130°C ohne Veränderung der Membranstruktur zulässt.

7. Verfahren nach einem oder mehreren der Ansprüche 1 bis 6, **dadurch gekennzeichnet, dass** ein Polyamid 6 eingesetzt wird.

8. Verfahren nach einem oder mehreren der Ansprüche 1 bis 8, **dadurch gekennzeichnet, dass** der Stabilisator zunächst mit dem Polymer in Form einer Trockenmischung vermischt und zusammen mit diesem aufgeschmolzen wird, bevor die homogene Lösung zusammen mit dem Lösemittelsystem hergestellt wird.

9. Verfahren nach einem oder mehreren der Ansprüche 1 bis 8, **dadurch gekennzeichnet, dass** als Antioxidationsmittel ein sterisch gehindertes Phenol ausgewählt wird.

10. Verfahren nach Anspruch 9, **dadurch gekennzeichnet, dass** als sterisch gehindertes Phenol ein Pentaerythriol Tetrakis(3-(3,5-di-tert-butyl-4-hydroxyphenyl)propionat (CAS-Nr. 6683-19-8), ein 3,3',3',5,5',5'-Hexa-tert-butyl-$\alpha,\alpha',\alpha'$-(mesitylene-2,4,6-triyl)tri-p-kresol (CAS-Nr. 1709-70-2) oder ein N,N'-Hexan-1,6-diyl-bis(3-(3,5-di-tert-butyl-4-hydroxyphenylpropionamid)) (CAS-Nr. 23128-74-7) ausgewählt wird.

11. Verfahren nach einem oder mehreren der Ansprüche 1 bis 10, **dadurch gekennzeichnet, dass** die Konzentration des Antioxidationsmittels zwischen 0,01 und 5 Gew.-%, bezogen auf das Polyamid, beträgt.

**12.** Verfahren nach Anspruch 11, **dadurch gekennzeichnet, dass** die Konzentration des Antioxidationsmittels zwischen 0,05 und 2 Gew.-%, bezogen auf das Polyamid, beträgt.

**13.** Polyamidmembran mit verbesserter Hydrolysestabilität auf Basis eines aliphatischen Polyamids, wobei zumindest der überwiegende Teil der Wand zwischen den Oberflächen der Polyamidmembran als Stützschicht mit einer mikroporösen, schwammartigen und offenporigen Struktur ausgebildet und frei von Makrovoids ist, **dadurch gekennzeichnet, dass** in der die Membranstruktur aufbauenden Polymermatrix ein zur Stabilisierung von Polyamiden wirksames Antioxidationsmittel in einer Konzentration zwischen 0,01 und 5 Gew.-%, bezogen auf das Polyamid, enthalten ist.

**14.** Polyamidmembran nach Anspruch 13, **dadurch gekennzeichnet, dass** sie in luftgesättigtem 80°C heißem Wasser eine Standzeit mindestens 100 Stunden ohne Verlust der mechanischen Stabilität aufweist.

**15.** Polyamidmembran nach Anspruch 14, **dadurch gekennzeichnet, dass** sie in luftgesättigtem 80°C heißem Wasser eine Standzeit mindestens 200 Stunden ohne Verlust der mechanischen Stabilität aufweist.

**16.** Polyamidmembran nach Anspruch 13, **dadurch gekennzeichnet, dass** sie einer wiederholen Heißdampfsterilisation bei mindestens 125°C in Gegenwart von Luftsauerstoff über mindestens 10 Zyklen mit einer Dauer von jeweils 1 Stunde ohne Verlust der mechanischen Stabilität standhält.

**17.** Polyamidmembran nach Anspruch 16, **dadurch gekennzeichnet, dass** die Konzentration an Stabilisator 0,05 bis 2 Gew.-% beträgt.

**18.** Polyamidmembran nach einem oder mehreren der Ansprüche 13 bis 17, **dadurch gekennzeichnet, dass** das Antioxidationsmittel ein sterisch gehindertes Phenol ist.

**19.** Polyamidmembran nach Anspruch 18, **dadurch gekennzeichnet, dass** das sterisch gehinderte Phenol ein Pentaerythritol Tetrakis(3-(3,5-di-tert-butyl-4-hydroxyphenyl)propionat (CAS-Nr. 6683-19-8), ein 3,3',3',5,5',5'-Hexa-tert-butyl-α,α',α'-(mesitylene-2,4,6-triyl)tri-p-kresol (CAS-Nr. 1709-70-2) oder ein N,N'-Hexan-1,6-diylbis(3-(3,5-di-tert-butyl-4-hydroxyphenylpropionamid)) (CAS-Nr. 23128-74-7) ist.

**20.** Polyamidmembran nach einem oder mehreren der Ansprüche 13 bis 19, **dadurch gekennzeichnet, dass** sie im wesentlichen aus einem Polyamid mit einem Zahlenmittel des Molekulargewichts zwischen 20000 und 60000 Dalton besteht.

**21.** Polyamidmembran nach einem oder mehreren der Ansprüche 13 bis 20, **dadurch gekennzeichnet, dass** sie im wesentlichen aus einem Polyamid besteht, welches einer Heißdampfsterilisation bei Temperaturen von mindestens 130°C ohne Veränderung der Membranstruktur standhält.

**22.** Polyamidmembran nach einem oder mehreren der Ansprüche 13 bis 21, **dadurch gekennzeichnet, dass** sie im wesentlichen aus einem Polyamid 6 besteht.

**23.** Polyamidmembran nach einem oder mehreren der Ansprüche 13 bis 22, hergestellt nach einem Verfahren gemäß einem oder mehreren der Ansprüche 1 bis 12.

**Claims**

**1.** Method for production of a hydrolytically stable polyamide membrane, the method comprising the following steps:

a) preparation of a homogeneous solution containing 10-90% by weight of an aliphatic polyamide in 90-10% by weight of a solvent system, where the mixture of polyamide and solvent system has a critical demixing temperature and a solidification temperature, and shows a miscibility gap below the demixing temperature in the liquid state;
b) shaping of the solution into a shaped object in a die, the die temperature being above the critical demixing temperature;
c) cooling of the shaped object by a cooling medium that has been conditioned to a cooling temperature below the solidification temperature, at a cooling rate such that a thermodynamic non-equilibrium liquid-liquid phase separation into a polymer-rich and a polymer-poor phase occurs, followed by solidification of the polymer-rich phase to the membrane structure when the temperature falls below the solidification temperature;
d) removal of the solvent system from the shaped object;

**characterised in that** the solution contains an antioxidant agent as a stabiliser for the polyamide, the antioxidant agent being essentially insoluble in the solvent system at the phase separation temperature.

2. Method according to Claim 1, **characterised in that** a mixture of a compound A and a compound B is used as the solvent system, where compound A is a solvent for the polyamide and compound B is a swelling agent or a non-solvent for the polyamide, i.e., a solvent that does dissolve the polyamide, but of which the dissolving temperature relative to the polyamide is at least 50°C higher than the dissolving temperature of compound A relative to the polyamide.

3. Method according to one or more of Claims 1 and 2, **characterised in that** the solvent system is water soluble.

4. Method according to one or more of Claims 1 to 3, **characterised in that** water is used as the cooling medium.

5. Method according to one or more of Claims 1 to 4, **characterised in that** a polyamide with a number average molecular mass between 20000 and 60000 daltons is used.

6. Method according to one or more of Claims 1 to 5, **characterised in that** a polyamide is used that permits superheated steam sterilisation of the polyamide membrane produced thereof at temperatures of at least 130°C without any change in the membrane structure.

7. Method according to one or more of Claims 1 to 6, **characterised in that** a polyamide-6 is used.

8. Method according to one or more of Claims 1 to 7, **characterised in that** the stabiliser is first mixed with the polymer in the form of a dry blend and melted along with it, before the homogeneous solution with the solvent system is prepared.

9. Method according to one or more of Claims 1 to 8, **characterised in that** a sterically hindered phenol is chosen as the antioxidant agent.

10. Method according to Claim 9, **characterised in that** the sterically hindered phenol chosen is pentaerythritol tetrakis(3-(3,5-di-tert-butyl-4-hydroxyphenyl)propionate (CAS no. 6683-19-8), 3,3',3',5,5',5'-hexa-tert-butyl-$\alpha,\alpha',\alpha'$-(mesitylene-2,4,6-triyl)tri-p-cresol (CAS no. 1709-70-2) or N,N'-hexane-1,6-diylbis(3-(3,5-di-tert-butyl-4-hydroxyphenylpropionamide)) (CAS no. 23128-74-7).

11. Method according to one or more of Claims 1 to 10, **characterised in that** the concentration of the antioxidant agent lies between 0.01 and 5% by weight relative to the polyamide.

12. Method according to Claim 11, **characterised in that** the concentration of the antioxidant agent lies between 0.05 and 2% by weight relative to the polyamide.

13. Polyamide membrane with improved hydrolytic stability based on an aliphatic polyamide, whereby at least the major part of the wall between the surfaces of the polyamide membrane is in the form of a supporting layer with a microporous, sponge-like and open-pored structure and is free of macrovoids, **characterised in that** an antioxidant agent that stabilises polyamides is contained in the polymer matrix constituting the membrane structure, in a concentration between 0.01 and 5% by weight relative to the polyamide.

14. Polyamide membrane according to Claim 13, **characterised in that** it has a service life of at least 100 hours without loss of mechanical stability when immersed in air-saturated water at 80°C.

15. Polyamide membrane according to Claim 14, **characterised in that** it has a service life of at least 200 hours without loss of mechanical stability when immersed in air-saturated water at 80°C.

16. Polyamide membrane according to Claim 13, **characterised in that** it withstands repeated superheated steam sterilisation at a temperature of at least 125°C in the presence of atmospheric oxygen over at least 10 cycles, each of a duration of 1 hour, without loss of mechanical stability.

17. Polyamide membrane according to Claim 16, **characterised in that** the concentration of stabiliser is 0.05 to 2% by weight.

18. Polyamide membrane according to one or more of Claims 13 to 17, **characterised in that** the antioxidant agent is a sterically hindered phenol.

19. Polyamide membrane according to Claim 18, **characterised in that** the sterically hindered phenol is pentaerythritol tetrakis(3-(3,5-di-tert-butyl-4-hydroxyphenyl)propionate (CAS no. 6683-19-8), 3,3',3',5,5',5'-hexa-tert-butyl-$\alpha,\alpha',\alpha'$-(mesitylene-2,4,6-triyl)tri-p-cresol (CAS no. 1709-70-2) or N,N'-hexane-1,6-diylbis(3-(3,5-di-tert-butyl-4-hydroxyphenylpropionamide)) (CAS no. 23128-74-7).

20. Polyamide membrane according to one or more of Claims 13 to 19, **characterised in that** it consists substantially of a polyamide of number average molecular mass between 20000 and 60000 daltons.

**21.** Polyamide membrane according to one or more of Claims 13 to 20, **characterised in that** it consists essentially of a polyamide that withstands superheated steam sterilisation at temperatures of at least 130°C without any change in the membrane structure.

**22.** Polyamide membrane according to one or more of Claims 13 to 21, **characterised in that** it consists essentially of a polyamide-6.

**23.** Polyamide membrane according to one or more of Claims 13 to 22, produced by a method according to one or more of Claims 1 to 12.

**Revendications**

**1.** Procédé pour la fabrication d'une membrane de polyamide résistante à l'hydrolyse, ledit procédé comprenant les étapes suivantes:

a) réalisation d'une solution homogène de 10 à 90% en poids d'un polyamide aliphatique dans 90-10% en poids d'un système de solvants, le mélange de polyamide et de système de solvants présentant une température de séparation critique et une température de solidification et, au-dessous de la température de séparation, à l'état liquide, une lacune de miscibilité,
b) formage de la solution en un corps moulé dans un outil de formage qui présente une température d'outil située au-dessus de la température de séparation critique,
c) refroidissement du corps moulé à l'aide d'un agent de refroidissement, qui est conditionné à une température de refroidissement inférieure à la température de solidification, à une vitesse telle qu'il se produit une séparation de phases liquide-liquide en état de non-équilibre thermodynamique, en une phase riche en polymère et une phase pauvre en polymère et, ensuite, lorsque la température descend au-dessous de la température de solidification, il se produit une solidification de la phase riche en polymère en une structure de membrane,
d) élimination du système de solvant du corps moulé,

**caractérisé en ce qu'**un agent antioxydant est contenu dans la solution en tant que stabilisant pour le polyamide, lequel n'est essentiellement pas soluble dans le système de solvant, à la température de séparation des phases.

**2.** Procédé selon la revendication 1, **caractérisé en ce que** l'on utilise, comme système de solvant, un mélange d'une composé A et d'une composé B, **en ce qu'**on utilise comme composé A un solvant et comme composé B un non solvant pour le polyamide, un solvant qui dissout le polyamide mais dont la température de dissolution en relation avec le polyamide est cependant supérieure d'au moins 50°C à la température de dissolution du composé A en relation avec le polyamide, ou un agent gonflant pour le polyamide.

**3.** Procédé selon une ou plusieurs des revendications 1 et 2, **caractérisé en ce que** le système de solvants est soluble dans l'eau.

**4.** Procédé selon une ou plusieurs des revendications 1 à 3, **caractérisé en ce que** de l'eau est utilisée comme agent de refroidissement.

**5.** Procédé selon une ou plusieurs des revendications 1 à 4, **caractérisé en ce qu'**un polyamide avec un poids moléculaire moyen en nombre situé entre 20000 et 60000 Dalton est utilisé.

**6.** Procédé selon une ou plusieurs des revendications 1 à 5, **caractérisé en ce que** l'on utilise un polyamide qui permet de stériliser à la vapeur surchauffée la membrane de polyamide ainsi fabriquée, à des températures d'au moins 130 °C, sans modification de la structure de la membrane.

**7.** Procédé selon une ou plusieurs des revendications 1 à 6, **caractérisé en ce que** l'on utilise un polyamide 6.

**8.** Procédé selon une ou plusieurs des revendications 1 à 7, **caractérisé en ce que** le stabilisant est d'abord mélangé avec le polymère sous la forme d'un mélange sec et est fondu en commun avec celui-ci avant que la solution homogène soit réalisée avec le système de solvant.

**9.** Procédé selon une ou plusieurs des revendications 1 à 8, **caractérisé en ce qu'**un phénol à empêchement stérique est choisi comme agent antioxydant.

**10.** Procédé selon la revendication 9, **caractérisé en ce que** l'on choisit, comme phénol à empêchement stérique, un tétrakis (3-(3,5-di-tert-butyl-4-hydroxyphényle) propionate de pentaérythriol (CAS N° 6683-19-8), un 3,3',3',5,5',5'-hexa-tert-butyl-$\alpha$,$\alpha$', $\alpha$'-(mésitylène-2,4,6-triyl)tri-p-crésol (CAS N° 1709-70-2) ou un N,N'-hexane-1,6-diylbis(3-(3,5-di-tert-butyl-4-hydroxyphényl-propio-namide) (CAS N° 23128-74-7).

**11.** Procédé selon une ou plusieurs des revendications 1 à 10, **caractérisé en ce que** la concentration de l'agent antioxydant est située entre 0,01 et 5% en poids par rapport au polyamide.

**12.** Procédé selon la revendication 11, **caractérisé en ce que** la concentration de l'agent antioxydant est située entre 0,05 et 2% en poids par rapport au polyamide.

**13.** Membrane en polyamide avec une résistance à l'hydrolyse améliorée, à base d'un polyamide aliphatique, au moins la majeure partie de la paroi de la membrane de polyamide, entre les surfaces, étant formée en tant que couche de support avec une structure microporeuse, genre éponge, et à pores ouverts et étant exempte de macro-poches, caratérisée en ce que, dans la matrice de polymère qui sert de base à la structure de la membrane, un agent antioxydant ayant pour effet de stabiliser les polyamides, lequel est contenu dans une concentration située entre 0,01 et 5% en poids par rapport au polyamide.

**14.** Membrane de polyamide selon la revendication 13, **caractérisée en ce que**, dans de l'eau à 80°C, saturée d'air, elle présente une durée de vie d'au moins 100 heures, sans pertes de stabilité mécanique.

**15.** Membrane en polyamide selon la revendication 14, **caractérisée en ce que**, dans de l'eau à 80°C, saturée d'air, elle présente une durée de vie d'au moins 200 heures, sans pertes de la stabilité mécanique.

**16.** Membrane en polyamide selon la revendication 13, **caractérisée en ce qu'**elle supporte une stérilisation réitérée à la vapeur surchauffée à au moins 125°C en présence d'oxygène atmosphérique, pendant au moins 10 cycles d'une durée respective de 1 heure, sans perte de stabilité mécanique.

**17.** Membrane en polyamide selon la revendication 16, **caractérisée en ce que** la concentration du stabilisant est de 0,05 à 2% en poids.

**18.** Membrane en polyamide selon une ou plusieurs des revendications 13 à 17, **caractérisée en ce que** l'agent antioxydant est un phénol à empêchement stérique.

**19.** Membrane en polyamide selon la revendication 18, **caractérisée en ce que** le phénol à empêchement stérique est un tétrakis(3- (3,5- di-tert-butyl- 4-hydroxyphényle) propionate de pentaérythriol (CAS No 6683-19-8), un 3,3', 3',5,5',5'-hexa-tert-butyl-$\alpha$, $\alpha$',$\alpha$'-(mésitylène-2,4,6-triyl)tri-p-crésol (CAS No 1709-70-2) ou un N,N'-Hexan-1,6-diylbis(3-(3,5-di-tert-butyl-4-hydroxyphényl- propionamide) (CAS No 23128-74-7).

**20.** Membrane en polyamide selon une ou plusieurs des revendications 13 à 19, **caractérisée en ce qu'**elle consiste essentiellement en un polyamide avec un poids moléculaire moyen en nombre situé entre 20000 et 60000 Dalton.

**21.** Membrane en polyamide selon une ou plusieurs des revendications 13 à 20, **caractérisée en ce qu'**elle consiste essentiellement un polyamide qui supporte une stérilisation à la vapeur surchauffée à des températures d'au moins 130° C, sans modification de la structure de la membrane.

**22.** Membrane en polyamide selon une ou plusieurs des revendications 13 à 21, **caractérisée en ce qu'**elle consiste essentiellement en un polyamide 6.

**23.** Membrane en polyamide selon une ou plusieurs des revendications 13 à 22, obtenue selon un procédé d'une ou de plusieurs des revendications 1 à 12.